**Europäisches Patentamt**

**European Patent Office**

**Office européen des brevets**

(11) Veröffentlichungsnummer : **0 048 851**
**B1**

(12) # EUROPÄISCHE PATENTSCHRIFT

(45) Veröffentlichungstag der Patentschrift :
**17.07.85**

(51) Int. Cl.⁴ : **G 01 D  3/02**

(21) Anmeldenummer : **81107123.2**

(22) Anmeldetag : **10.09.81**

(54) **Digitales elektrisches Längen- oder Winkelmesssystem.**

(30) Priorität : **30.09.80 DE 3036830**

(43) Veröffentlichungstag der Anmeldung :
**07.04.82 Patentblatt 82/14**

(45) Bekanntmachung des Hinweises auf die Patenterteilung : **17.07.85 Patentblatt 85/29**

(84) Benannte Vertragsstaaten :
**AT CH FR GB IT LI NL SE**

(56) Entgegenhaltungen :
**DE-A- 2 703 932**
**DE-A- 2 729 697**
**DE-A- 2 804 678**
**DE-B- 2 549 222**
**IBM TECHNICAL DISCLOSURE BULLETIN, vol. 15, no. 6, November 1972, Seiten 1869,1870, New York (USA); F.J. SOYCHAK et al.: "General purpose monolithic memory linearizer".**

(73) Patentinhaber : **Dr. Johannes Heidenhain GmbH
Nansenstrasse 17
D-8225 Traunreut (DE)**

(72) Erfinder : **Miller, Walter, Dr.
Adalbert-Stifter-Strasse 19
D-8220 Traunstein (DE)**

**Beschreibung**

Die Erfindung bezieht sich auf ein digitales elektrisches Längen- oder Winkelmeßsystem nach dem Oberbegriff des Anspruches 1. Derartige Einrichtungen werden beispielsweise als Positionsanzeigen für bewegliche Bauteile oder in Verbindung mit numerischen Steuerungen benutzt.

Unter digitalen elektrischen Längen- oder Winkelmeßeinrichtungen sind gemäß der Norm Meßeinrichtungen zu verstehen, die einer Meßgröße eine Ausgangsgröße zuordnen, die eine mit fest gegebenem kleinsten Schritt quantisierte, zahlenmäßige Darstellung der Meßgröße ist. Die Meßsignalerzeugung ist dabei durch unterschiedliche Methoden der Teilungsabtastung möglich. Man unterscheidet photoelektrische, induktive, magnetische und kapazitive Abtastprinzipien. Bei digital-inkrementalen Meßeinrichtungen ist die Meßteilung stets periodisch strukturiert; bei digital-absoluten Meßeinrichtungen — zumindest bei denen höherer Auflösung — trifft dies für die feinste Spur zu. Bei inkrementalen Meßeinrichtungen sind die einzelnen Teilungsinkremente nicht unterscheidbar. Die Längenmessung basiert auf dem fortlaufenden Addieren der Zählinkremente, die beim Durchfahren der Meßstrecke vom Anfangspunkt zum Endpunkt auftreten. Die mit Hilfe eines Aufnehmers von einer Maßverkörperung abgeleiteten Signale sind der Teilung entsprechend periodisch, wobei sie innerhalb einer Periode praktisch immer analog sind (so daß insbesondere ein inkrementales meßsystem als Aneinanderreihung einer Anzahl von Analog-Meßbereichen aufgefaßt werden kann).

Es ist üblich, mit Hilfe der periodischen Signale die Analog-Meßbereiche in eine bestimmte Anzahl von Digitalschritten zu unterteilen.

Es sind zahlreiche Korrekturmethoden bei digitalen elektrischen Längen- oder Winkelmeßeinrichtungen bekannt. Man unterscheidet grundsätzlich die mechanischen und die elektronischen Korrekturmethoden. Mechanische Korrektureinrichtungen sind einem veränderten Fehlerverlauf nur schwer anzupassen. Sie sind mechanisch aufwendig herzustellen und daher im allgemeinen groß und kostspielig.

Aus der DE-PS-1 638 032 ist eine elektronische Fehlerkorrektureinrichtung bekannt. Dort wird vorgeschlagen, bestimmte — durch Vorabvermessung ermittelte — Korrekturwerte in einem Speicher abzuspeichern. Ein elektronischer Digitalrechner ist derart programmiert, daß die im Speicher enthaltenen Korrekturwerte an bestimmten verschiedenen Stellungen des beweglichen Bauteiles den Meßwerten überlagert werden. Bei dem heutigen Stand der Technik wird als rechner ein Mikroprozessor und als Speicher ein Festwertspeicher eingesetzt.

Um eine derartige Korrekturmethode auch bei inkrementalen Meßeinrichtungen sinnvoll anwenden zu können, wird in den deutschen Patentschriften DE-PS-2 732 909 (Anspruch 3) und DE-PS-2 732 954 (Anspruch 6) vorgeschlagen, die Korrekturpositionen absolut festzulegen, so daß in jedem Falle eine richtige Zuordnung der Korrekturwerte zu den Korrekturpositionen gewährleistet ist.

In der DE-OS-2 729 697 ist ferner vorgeschlagen worden, die zu interpolierenden Signale — die durch die Abtastung der periodischen Teilung gewonnen werden — auf Fehler wie Gleichspannungsanteil, Amplitudenschwankung und Phasendifferenz zu untersuchen. Die ermittelten Abweichungen werden als digitale Korrekturwerte in einem Speicher zur Korrektur der digitalisierten Abtastsignale gespeichert. Die digitalisierten und korrigierten Abtastsignale werden anschließend in einem Digitalrechner interpoliert, um so bei der Meßeinrichtung eine höhere Auflösung zu erzielen.

Der Erfindung liegt die Aufgabe zugrunde, mit einfachen Mittein durch Interpolation eine hochauflösende Meßeinrichtung der eingangs genannten Art zu schaffen, bei der auch die aus den unveränderten periodischen Abtastsignalen gebildeten Interpolationswerte praktisch fehlerfrei sind.

Diese Aufgabe wird bei einem Meßsystem gemäß dem Oberbegriff des Anspruchs 1 durch die im Kennzeichen des Anspruches 1 angegebenen Maßnahmen gelöst. Weitere, die Erfindung ausgestaltende Maßnahmen entnimmt man den Unteransprüchen.

Besondere Vorteile der erfindungsgemäßen Interpolationsfehlerkorrektur liegen darin, daß alle Fehlerparameter im Rahmen der Referenzmeßgenauigkeit bei der Korrektur berücksichtigt werden, und daß die Anzahl der einzelnen Unterteilungskorrekturen der geforderten Meßsystemgenauigkeit und dem vertretbaren technologischen und wirtschaftlichen Aufwand relativ einfach angepaßt werden kann.

Eine besonders vorteilhafte Korrekturmethode besteht in der Überlagerung der bekannten elektronischen Fehlerkorrektur gemäß DE-PS 1 638 032 und der erfindungsgemäßen Interpolationsfehlerkorrektur.

Anhand der Zeichnungen soll die Erfindung noch näher erläutert werden.

Es zeigt.

Figur 1 Ein Blockschaltbild eines Meßsystems, das gemäß der Erfindung betrieben wird.

Figur 2 Ein Blockschaltbild eines Systems zur Fehlererfassung und Korrektur.

Figur 3 Den Verlauf einer Interpolationsfehlerkurve innerhalb einer Teilungsperiode.

Figur 4 Den Verlauf einer Fehlerkurve über mehrere Teilungsperioden mit überlagertem periodischen Fehler.

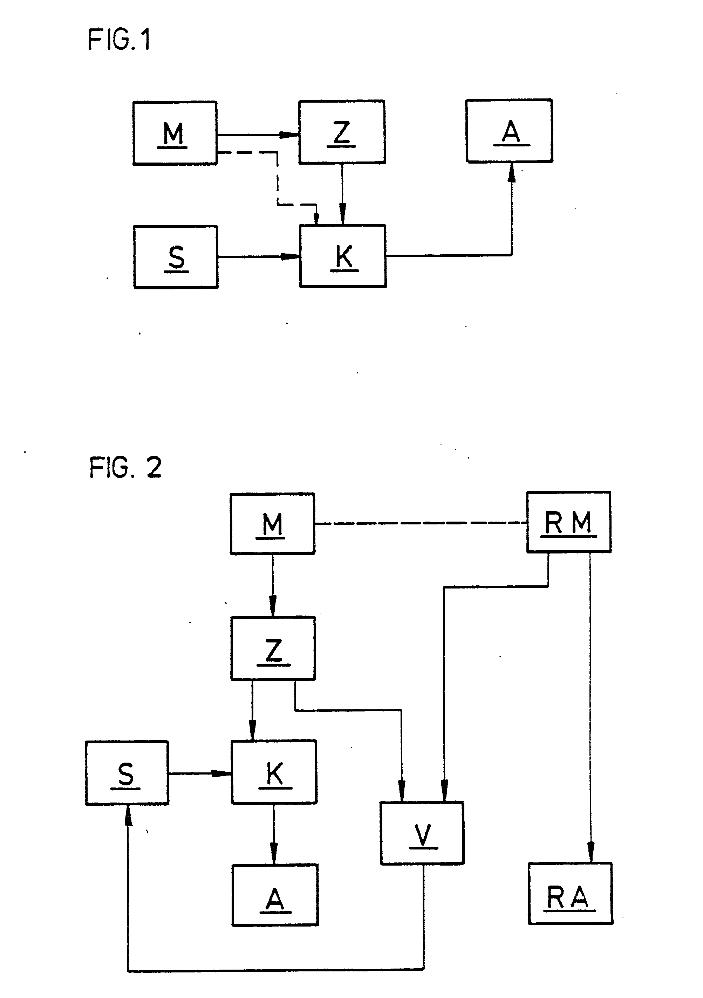

Das Blockschaltbild in Figur 1 zeigt ein digitales elektrisches Meßsystem mit herkömmlichen Bausteinen, die um eine digitale elektronische Korrektureinrichtung ergänzt ist.

Das Erfindungsgemäße Verfahren wird bevorzugt bei inkrementalen Meßeinrichtungen angewandt.

Bei inkrementalen Meßsystemen ist es üblich, zur Messung von Längen oder Winkeln zwei phasenversetzte Signale zu erzeugen. Bei Abtastung einer periodisch strukturierten Teilung werden durch räumlich versetzte Abtastgitter mindestens zwei Abtastsignale erzeugt, die um 90° phasenverschoben sind. Aus dieser Phasenverschiebung läßt sich die bewegungsrichtung der Abtasteinrichtung gegenüber der Teilung ermitteln.

Diese Abtastsignale haben — bei gewissen geometrischen Zusammenhängen zwischen Teilung und Abtasteinrichtung — etwa sinusförmigen bzw. cosinusförmigen Verlauf und die gleiche Periodizität wie die Teilung (die Meßsignalperiode entspricht dabei dem Teilungsraster). Die Teilungskonstanten sind hinsichtlich ihrer Auflösung physikalisch und technologisch nicht ohne weiteres zu verkleinern. Daher wird die angestrebte erhöhte Auflösung im allgemeinen durch elektronische Unterteilung (Interpolation) der ortsabhängigen Meßsignale erreicht.

Hierzu ist eine Interpolationseinrichtung zur Zwischenwertbildung erforderlich, in der die durch die Teilung festgelegten Weg- oder Winkelschritte in kleinere, untereinander gleichgroße Schritte unterteilt werden.

Die eingangs beschriebene elektronische Korrektureinrichtung bei einer Interpolationseinrichtung (DE-OS-2 729 697) verringert Fehleranteile, indem sie die analogen Abtastsignale zumindest auf drei Fehlerparameter untersucht (Gleichspannungsanteil, Amplitudenschwankung, Phasenfehler) und die ermittelten Fehler durch Korrekturwerte in digitaler Form den dann bereits ins Digitale gewandelten Abtastsignalen überlagert, und erst diese korrigierten und digitalisierten Signale interpoliert.

Gemäß Figur 1 werden aus den vom Meßsystem M gelieferten Meßsignalen in einem Interpolator Z Zwischenwerte J jeweils aus den vollen Signalperioden gebildet. In einem Speicher S sind diesen Zwischenwerten J zugeordnete Korrekturwerte C gespeichert. Der Speicher S ist zweckmäßig ein Festwertspeicher (ROM, PROM, PLA). Die Zwischenwerte J werden in. eine Korrektureinrichtung K eingegeben, wo sie mit den Korrekturwerten C aus dem Speicher S überlagert werden. Die Zuordnung der Korrekturwerte C zu den Zwischenwerte J erfolgt mittels eines nicht dargestellten Digitalrechners in der Korrektureinrichtung K. Der Ausgang der Korrektureinrichtung K ist an eine Auswertestufe A geschaltet, die aus einer Anzeigevorrichtung oder einer Steuereinrichtung bestehen kann. Dort sind die korrigierten Meßwerte verfügbar.

Die Elemente M, S und K können auch zur Korrektur systematischer Fehler (z. B. Perioden-Fehler) für bestimmte Punkte des Meßbereiches gemäß DE-PS-1 638 032 herangezogen werden. Hierzu ist eine elektrische Verbindung zwischen den Elementen M und K erforderlich, die gestrichelt dargestellt ist.

In Figur 2 ist schematisch dargestellt, wie die Korrekturwerte C ermittelt und verarbeitet werden können.

Mit dem Meßsystem M ist ein hochgenaues Referenzmeßsystem RM in geeigneter Weise gekoppelt. Beim Meßvorgang werden in beiden Meßsystemen M und RM Meßsignale erzeugt. Zur Erhöhung der Auflösung werden aus den Meßsignalen des Meßsystemes M in einem Interpolator Z Zwischenwerte J erzeugt. Diese Zwischenwerte J werden zum einen einer Korrektureinrichtung K und zum anderen einer Vergleichereinrichtung (Komparator V) zugeführt. Die Meßsignale des Referenzmeßsystems RM (z. B. ein Laserinterferometer) werden ebenfalls dem Komparator V sowie einer Referenzanzeigevorrichtung RA zugeführt.

Im Komparator V werden die vom Meßsystem M gelieferten Zwischenwerte J mit den hochgenauen Meßwerten des Referenzmeßsystems RM verglichen und im Falle einer Abweichung wird die Differenz als Korrekturwert C vorzeichenrichtig in einem Speicher S abgespeichert. Aus diesem Speicher S gelangen die Korrekturwerte C in die Korrektureinrichtung K, wo sie den zugehörigen Zwischenwerten J überlagert werden. Ein in der Korrektureinrichtung K vorgesehener, nicht dargestellter Rechner ist dabei so organisiert, daß die eingespeicherten Korrekturwerte C in der richtigen Reihenfolge und in der jeweils richtigen Position aus dem elektronischen Speicher S ausgelesen und rechnerisch berücksichtigt werden. Auf diese Weise werden die Interpolationswerte kalibriert. Die Korrektureinrichtung K speist eine Anzeigevorrichtung A, in der nun die korrigierten Meßwerte ablesbar sind. Bei ordnungsgemäßem Ablauf muß die Anzeige A des Meßsystems M mit der Referenzanzeige RA des Referenzmeßsystems RM übereinstimmen.

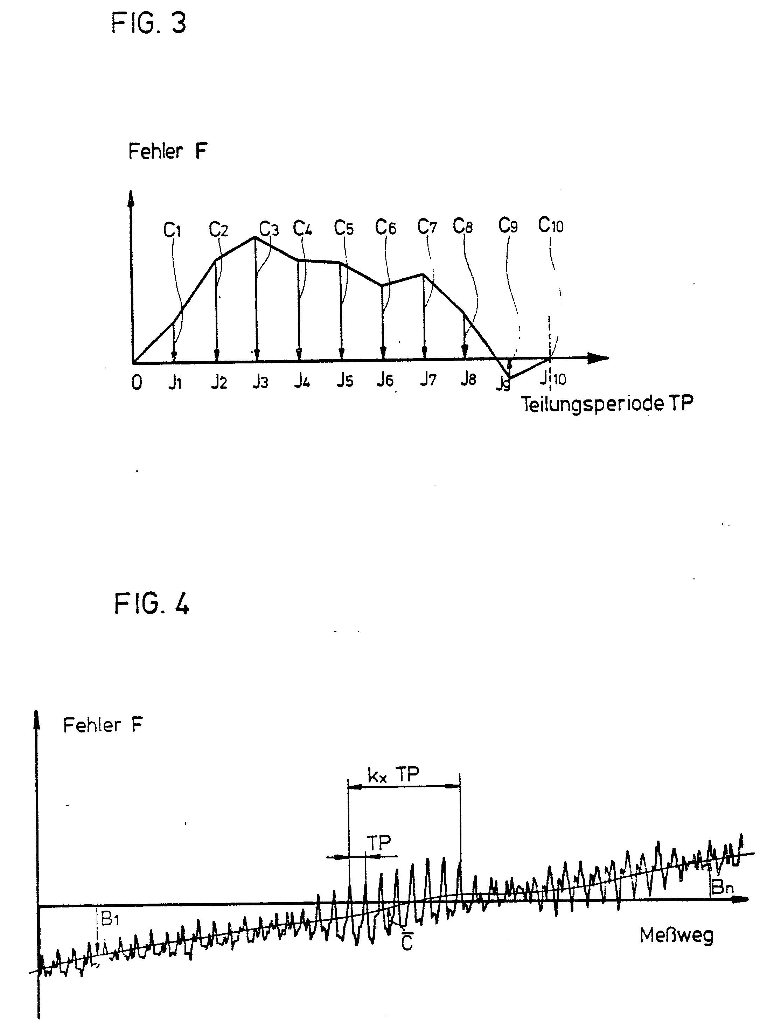

In Figur 3 ist dargestellt, welchen Verlauf eine Fehlerkurve innerhalb einer Teilungsperiode haben könnte. Die Pfeile $C_1$ bis $C_{10}$ stellen dabei die Korrekturwerte für die Interpolationswerte $J_1$ bis $J_{10}$ dar.

Weiterhin besteht die Möglichkeit, nicht jedem Zwischenwert einen individuellen Korrekturwert zuzuordnen, da das bei Gitterkonstanten von beispielsweise 10 μm in einer lichtelektrischen inkrementalen Meßeinrichtung zu sehr vielen Speicherplätzen führen würde.

Vielmehr wird zweckmäßigerweise ein mittlerer Unterteilungsfehler abschnittsweise oder für den gesamten Meßbereich bestimmt und kompensiert.

In Figur 4 ist eine Fehlerkurve dargestellt, bei der den Periodenfehlern die Unterteilungsfehler überlagert sind. Es ist erkennbar, daß sich über mehrere Teilungsperioden TP auch der Unterteilungsfehler verändert. Hier kann jeweils abschnittsweise über mehrere Teilungsperioden TP der mittlere Unterteilungsfehler ermittelt werden. Es wird danach ein mittlerer Korrekturwert $\bar{C}$ ermittelt, mit dem ausgewählte Zwischenwerte der jeweiligen Periodengruppe k × TP beaufschlagt werden. Die Korrekturwerte für die Perio-

denfehler tragen die Bezugszeichen $B_1$ ... $B_n$.

Im übrigen können für bestimmte Unterteilungswerte die Korrekturen ermittelt und unmittelbar berücksichtigt werden, während für die übrigen Unterteilungswerte die Korrekturwerte durch Interpolation der benachbarten vorab bestimmten Korrekturwerte ermittelt werden.

Die Ermittlung der Fehler erfolgt am rationellsten im Verlaufe einer Eichmessung im Rahmen der Qualitäts-Kontrolle für die Meßeinrichtung.

Andererseits ist auch eine permanente Kalibrierung denkbar, wenn die Verfahrgeschwindigkeit des zu messenden Objektes exakt gleichförmig ist und die Verfahrgeschwindigkeit von einem präzisen Zeitglied kontrolliert wird. Der Meßweg ist ein Produkt aus Verfahrgeschwindigkeit und Zeit, so daß bei entsprechender Genauigkeit dieser Faktoren die jeweilige Position bestimmt und mit dem zugehörigen durch Interpolation gebildeten Zwischenwert verglichen werden kann. Sich bei diesem Vergleich ergebende Abweichungen werden als Korrekturwerte in der oben beschriebenen Weise den zugehörigen Zwischenwerten überlagert.

Es liegt im Rahmen der Erfindung, auch beliebige andere Positionen entlang der Verfahrstrecke auf diese Weise zu bestimmen und den Meßwerten die zugehörigen Korrekturwerte zuzuordnen.

## Patentansprüche

1. Digitales elektrisches Längen- oder Winkelmeßsystem mit einer periodisch strukturierten Teilung, einer diese Teilung durch gegenseitige Rekativbewegung abtastenden Abtasteinrichtung, einer Interpolationseinrichtung (Z) zur Bildung von Zwischenwerten (J) aus den von der Abtasteinrichtung gelieferten periodischen Abtastsignalen und einer Einrichtung (K) zur elektronischen Korrektur der Abtastsignale, wobei ein Korrekturwertspeicher (S) für vorab ermittelte Korrekturwerte (C) an die Korrektureinrichtung (K) angeschlossen ist, und einer Auswertestufe (A), gekennzeichnet durch folgende Merkmale :

a) die Abtastsignale sind der Interpolationseinrichtung (Z) unkorrigiert zugeführt ;

b) an den Ausgang der Interpolationseinrichtung (Z) ist die Korrektureinrichtung (K) angeschlossen, in die die Zwischenwerte (J) eingespeist werden ;

c) an den Ausgang der Korrektureinrichtung (K) ist die Auswertestufe (A) angeschlossen, in die die mit jeweils einem individuellen Korrekturwert beaufschlagten Zwischenwerte (J) als korrigierte Meßwerte eingespeist werden.

2. Meßsystem nach Anspruch 1, dadurch gekennzeichnet, daß für augewählte Zwischenwerte $(J_{1..n})$ jeweils abschnittsweise über mehrere Teilungsperioden $(k \times TP)$ der mittlere Interpolationsfehler $(\bar{F})$ ermittelt wird, und der dem Interpolationsfehler (F) entsprechende Korrekturwert (C̄) den zugehörigen ausgewählten Zwischenwerten (J) überlagert wird.

3. Meßsystem nach Anspruch 1, dadurch gekennzeichnet, daß ausgewählten Zwischenwerten $(J_{1..n})$ bestimmte Korrekturwerte $(C_{1..n})$ zugeordnet sind, daß Korrekturwerte $(C_{A..K})$ für weitere Zwischenwerte $(J_{A..K})$ durch Interpolation der Korrekturwerte $(C_{1..n})$ ermittelt werden und die weiteren Zwischenwerte $(J_{A..K})$ mit den durch die Interpolation gewonnenen Korrekturwerten $(C_{A..K})$ beaufschlagt werden.

4. Meßsystem nach Anspruch 1, dadurch gekennzeichnet, daß die vorab ermittelten Korrekturwerte in Form einer Fehlertabelle in dem elektronischen Korrekturwert-Speicher (S) gespeichert sind.

5. Meßsystem nach Anspruch 1, dadurch gekennzeichnet, daß zusätzlich für Abtastsignale der vollen Teilungsperioden (TP) Korrekturwerte $(B_{1..n})$ ermittelt und den Abtastsignalen überlagert werden.

6. Meßsystem nach Anspruch 1 und 5, dadurch gekennzeichnet, daß die Korrekturwerte $(C_{1..n}$ und $B_{1..n})$ in einer Eichmessung ermittelt werden.

7. Meßsystem nach Anspruch 1 und 5, dadurch gekennzeichnet, daß die abgespeicherten Korrekturwerte $(C_{1..n}$ und $B_{1..n})$ im Meßbetrieb automatisch nach der Ermittlung der Zwischenwerte $(J_{1..n})$ diesen überlagert werden.

8. Meßsystem nach Anspruch 1, dadurch gekennzeichnet, daß die Korrektur der Abtastsignale unter Heranziehung eines Zeitgebers durch eine permanente Kalibrierung der Zwischenwerte (J) erfolgt, wobei permanent durch Vergleich der aus dem Produkt von Verfahrgeschwindigkeit und Zeit festgelegten Position mit den momentan durch Interpolation gebildeten Zwischenwerten $(J_{1..n})$ der jeweilige Korrekturwert $(C_{1..n})$ ermittelt wird.

## Claims

1. Digital, electric length or angle measuring system having a periodically structured graduation, a scanning device scanning this graduation by reciprocal relative movement, an interpolation device (Z) for the formation of intermediate values (J) from the scanning signals periodically delivered by the scaning device and a device (K) for the electronic correction of the scanning signals, a correction-value memory (S) for previously determined correction values (C) being connected to the correction device (K), and an evaluation stage (A), characterised by the following features :

a) the scanning signals are supplied uncorrected to the interpolation device (Z) ;

b) connected to the output of the interpolation device (Z) is the correction device (K), into which the intermediate values (J) are fed ;

c) connected to the output of the correction device (K) is the evaluation stage (A), into which the intermediate values (J), submitted in each

7 **0 048 851** 8

case to an individual correction value, are fed as corrected measured values.

2. Measuring system according to Claim 1, characterised in that, for selected intermediate values ($J_{1..n}$), the average interpolation error ($\bar{F}$) is determined in each case section by section over several graduation periods (k × TP), and the correction value ($\bar{C}$) corresponding to the interpolation error ($\bar{F}$) is superimposed on the associated selected intermediate values (J).

3. Measuring system according to Claim 1, characterised in that certain correction values ($C_{1..n}$), are assigned to selected intermediate values ($J_{1..n}$), in that correction values ($C_{A..K}$) are determined for further intermediate values ($J_{A..K}$) by interpolation of the correction values ($C_{1..n}$) and the further intermediate values ($J_{A..K}$) are submitted to the correction values ($C_{A..K}$) obtained by the interpolation.

4. Measuring system according to Claim 1, characterised in that the previously determined correction values are stored in the form of an error table in the electronic correction-value memory (S).

5. Measuring system according to Claim 1, characterised in that correction values ($B_{1..n}$) are additionally determined for scanning signals of the full graduation period (TP) and are superimposed on the scanning signals.

6. Measuring system according to Claims 1 and 5, characterised in that the correction values ($C_{1..n}$ and $B_{1..n}$) are determined by calibration measurement.

7. Measuring system according to Claims 1 and 5, characterised in that the stored correction values ($C_{1..n}$ and $B_{1..n}$) are automatically superimposed in the measurement operation on the intermediate values ($J_{1..n}$) after they have been determined.

8. Measuring system according to Claim 1, characterised in that the correction of the scanning signals is performed using a timer by a permanent calibration of the intermediate values (J), the particular correction value ($C_{1..n}$) being permanently determined by comparison of the position established by the product of travelling speed and time with the intermediate values ($J_{1..n}$) momentarily formed by interpolation.

**Revendications**

1. Système de mesure électrique numérique de longueurs ou d'angles comprenant une graduation structurée périodiquement, un dispositif de balayage balayant cette graduation par déplacement relatif réciproque, un dispositif d'interpolation (Z) pour la formation de valeurs intermédiaires (J) à partir des signaux de balayage périodiques délivrés par le dispositif de balayage et un dispositif (K) pour la correction électronique des signaux de balayage, une mémoire (S) pour des valeurs de correction (C) établies au préalable étant reliée au dispositif de correction (K), et un étage d'interprétation (A) caractérisé par les caractéristiques suivantes :

a) les signaux de balayage sont amenés non corrigés au dispositif d'interpolation (Z) ;

b) à la sortie du dispositif d'interpolation (Z) est raccordé le dispositif de correction (K) dans lequel sont stockées les valeurs intermédiaires (J) ;

c) à la sortie du dispositif de correction (K) est raccordé l'étage d'interprétation (A) dans lequel sont stockées, en tant que valeurs de mesure corrigées, les valeurs intermédiaires (J) respectivement assorties d'une valeur de correction individuelle.

2. Système de mesure selon la revendication 1, caractérisé par le fait que pour les valeurs intermédiaires sélectionnées ($J_{1..n}$), on détermine à chaque fois section par section sur plusieurs périodes de la graduation (k × TP) l'erreur d'interpolation moyenne ($\bar{F}$) et que l'on superpose la valeur de correction ($\bar{C}$) correspondant à l'erreur d'interpolation ($\bar{F}$) aux valeurs intermédiaires (J) sélectionnées y relatives.

3. Système de mesure selon la revendication 1, caractérisé par le fait qu'aux valeurs intermédiaires sélectionnées ($J_{1..n}$), on associe des valeurs de correction établies ($C_{1..n}$), que par interpolation des valeurs de correction ($C_{1..n}$), on établit des valeurs de correction ($C_{A..K}$) pour d'autres valeurs intermédiaires ($J_{A..K}$) et qu'on applique aux autres valeurs intermédiaires ($J_{A..K}$) les valeurs de correction ($C_{A..K}$) obtenues par l'interpolation.

4. Système de mesure selon la revendication 1, caractérisé par le fait que l'on stocke dans la mémoire électronique (S) les valeurs de correction préalablement établies sous la forme d'un tableau d'erreurs.

5. Système de mesure selon la revendication 1, caractérisé par le fait que pour les signaux de balayage des périodes entières (TP) de la graduation, on établit en plus des valeurs de correction ($B_{1..n}$) et qu'on les superpose aux signaux de balayage.

6. Système de mesure selon les revendications 1 et 5, caractérisé par le fait qu'on établit les valeurs de correction ($C_{1..n}$ et $B_{1..n}$) au cours d'une mesure d'étalonnage.

7. Système de mesure selon les revendications 1 et 5, caractérisé par le fait qu'après la détermination des valeurs intermédiaires ($J_{1..n}$), on leur superpose automatiquement au cours de la mesure des valeurs de correction mémorisées ($C_{1..n}$ et $B_{1..n}$).

8. Système de mesure selon la revendication 1, caractérisé par le fait qu'on effectue la correction des signaux de balayage avec emploi d'une horloge par un étalonnage permanent des valeurs intermédiaires (J), la valeur de correction ($C_{1..n}$) à chaque fois considérée étant établie en permanence par comparaison de la position définie par le produit de la vitesse de déplacement et du temps avec les valeurs intermédiaires ($J_{1..n}$) instantanément formées par interpolation.

—

FIG.1

FIG. 2

## FIG. 3

Fehler F

Teilungsperiode TP

## FIG. 4

Fehler F

Meßweg

2